# EUROPEAN PATENT SPECIFICATION

(11) **EP 1 781 960 B1**
(45) Date of publication and mention of the grant of the patent: **13.06.2012**
(21) Application number: 05759872.4
(22) Date of filing: 06.07.2005
(51) Int. Cl.: F16F 9/46

(54) **SHOCK ABSORBER WITH ELECTRONIC ADJUSTMENT**
STOSSDÄMPFER MIT ELEKTRONISCHER VERSTELLUNG
AMORTISSEUR DE CHOCS A REGLAGE ELECTRONIQUE

(30) Priority: 08.07.2004 NL 1026610; 16.02.2005 NL 1028293
(43) Date of publication of application: 09.05.2007
(73) Proprietor: WP Suspension B.V., 6581 KA Malden (NL)
(72) Inventor: LINDEMAN, Eric, Alexander, NL-6642 AR Beuningen (NL); DE RUITER, Adrianus, Antonius, Wilhelmus, NL-5384 HS Heesch (NL)
(74) Representative: Riemens, Roelof Harm
(86) International application number: PCT/NL2005/000483
(87) International publication number: WO 2006/006847

(56) References cited:
- EP-A- 0 240 704
- EP-A- 0 741 051
- DE-A1- 4 429 562
- GB-A- 664 770

## Description

The invention relates to a shock absorber for use in vehicles, in particular for a motorcycle.

By way of example, NL-C 1016147 shows a shock absorber for a motorcycle which is composed, in a known way, of a damper piston-cylinder system and a coil spring extending around it. Securing eyelets are provided at the topside and underside of the system. The prestress of the coil spring can be adjusted using what is referred to as a preload adjuster. For this purpose, the topside of the coil spring is supported against a spring cup which can be displaced up and down in the axial direction of the shock absorber by means of a hydraulically acting system. The hydraulically acting system comprises an annular displacement piston-cylinder system, which acts on the spring cup and the pressure of which can be varied by means of an actuating member. The actuating member comprises a control piston-cylinder system which is mounted to the side of the damper piston-cylinder system and in which the position of the control piston can be adjusted by hand by means of a rotary knob with a threaded spindle. It is in this way possible to vary the pressure in the control piston-cylinder system and to alter the position of the spring cup in the axial direction accordingly.

One drawback of this arrangement is that the adjustment quality leaves something to be desired. The adjustment is carried out by hand; in practice, it has been found that it is relatively difficult to turn the rotary knob. Furthermore, the adjustment has to be carried out when the motorcycle is stationary. Adjustment when the motorcycle is moving is irresponsible. If more than one shock absorber of this type is used on the same vehicle, it is not easy to set a desired adjustment to be exactly equal for each of them. This can lead to different deviations, with adverse consequences for the driving performance and ride comfort.

Documents US 5,988,330, A and EP 1006292 A disclose relevant shock absorbers with a needle shut-off member.

It is an object of the present invention to at least partially overcome the above drawbacks and/or to provide a usable alternative. In particular, it is an object of the invention to provide a user-friendly shock absorber whereof the damping properties and characteristics can be adapted quickly and easily.

This object is achieved by a shock absorber according to claim 1. In this case, the shock absorber comprises a hydraulic damper cylinder with a damper piston which can be displaced therein. A piston rod is connected to the damper piston. Assembly parts are provided at the free ends of the damper cylinder and the piston rod. First and second spring bases are provided in the vicinity of the assembly parts, with a compression spring enclosed between them. In the piston rod of the damper piston there is a through-flow passage which extends between chambers in the damper cylinder on either side of the damper piston and which can form a flow connection between these chambers. In the through-flow passage there is an adjustable valve body, the position of which in the through-flow passage can be adjusted by an actuable electric motor for adjusting the position of the valve body in the through-flow passage. Therefore, the position adjustment of the valve body by means of the electric motor provides a quick and efficient way of closing off the through-flow passage in the piston rod to a greater or lesser extent and in this way adapting the damping properties. Arranging in the valve body in a cavity in the piston rod represents a simple solution and advantageously makes the assembly compact. The needle shut-off member, on the side of the electric motor, is provided with a part with a cross section which is smaller than the largest cross section of the needle shut-off member. The narrow part is, for example, formed by a pin connected to the bottom end of the needle shut-off member. As a result, in the event of a build-up of pressure in the through-flow passage, the resultant force on the needle shut-off member is reduced, which means that it is possible to make do with a less powerful electric motor and/or to shorten the adjustment time.

In particular, the valve body is designed to interact with a threaded spindle, which in turn is connected to the electric motor such that it can be driven in rotation. This makes it possible to adjust the position of the valve body quickly and accurately.

More particularly, the valve body comprises a needle shut-off member .which extends at least partially within the through-flow passage and the axial position of which can be adjusted by means of the electric motor. In this case, a seat is provided in the through-flow passage on the side of the free end of the needle shut-off member, against which seat the needle shut-off member can bear in a sealing manner in order to shut off the through-flow passage and/or with respect to which the needle shut-off member can shut off the through-flow passage to a greater or lesser extent. The needle shut-off member may advantageously extend as far as the vicinity of the bottom end of the piston rod, so that the electric motor can be provided there.

In a further embodiment, the through-flow passage, on the side of the free end of the piston rod, is delimited by a nonreturn valve for substantially shutting off the through-flow passage during an inward movement of the damper piston in the damper cylinder and opening the through-flow passage during an outward movement of the damper piston in the damper cylinder. This prevents the valve body from pressing too hard onto the electric motor in the event of a build-up of pressure in the damper cylinder during the inward movement. This represents a problem, for example, if the electric motor used was a stepper motor, since this motor may be displaced if the pressure of the valve body is too high, so that it is no longer in the correct position. In addition, the nonreturn valve makes it possible, in the embodiment with the needle shut-off member, to provide a relatively small narrow section at the bottom end of the needle shut-off member. This narrow section should not be too large, since otherwise the needle shut-off member can be pulled onto its seat and in this way shut off the through-flow passage in an undesired way during the outward movement.

Further preferred embodiments are defined in the subclaims.

The invention also relates to a motorcycle according to claim 8.

The invention will be explained in more detail with reference to the appended drawings, in which:
Fig. 1 shows a perspective view, partially in section, of a preferred embodiment of the shock absorber for a motorcycle according to the invention;
Fig. 2 shows a bottom view of Fig. 1;
Fig. 3 shows a cross-sectional view on line III-III in Fig. 1;
Fig. 4 shows a cross-sectional view on line IV-IV in Fig. 2;
Fig. 5 shows a view of part of Fig. 4 on an enlarged scale;
Fig. 6 shows a view of part of Fig. 5 on an enlarged scale;
Fig. 7 shows a variant of Fig. 1; and
Fig. 8 shows a view of part of Fig. 7 on an enlarged scale.

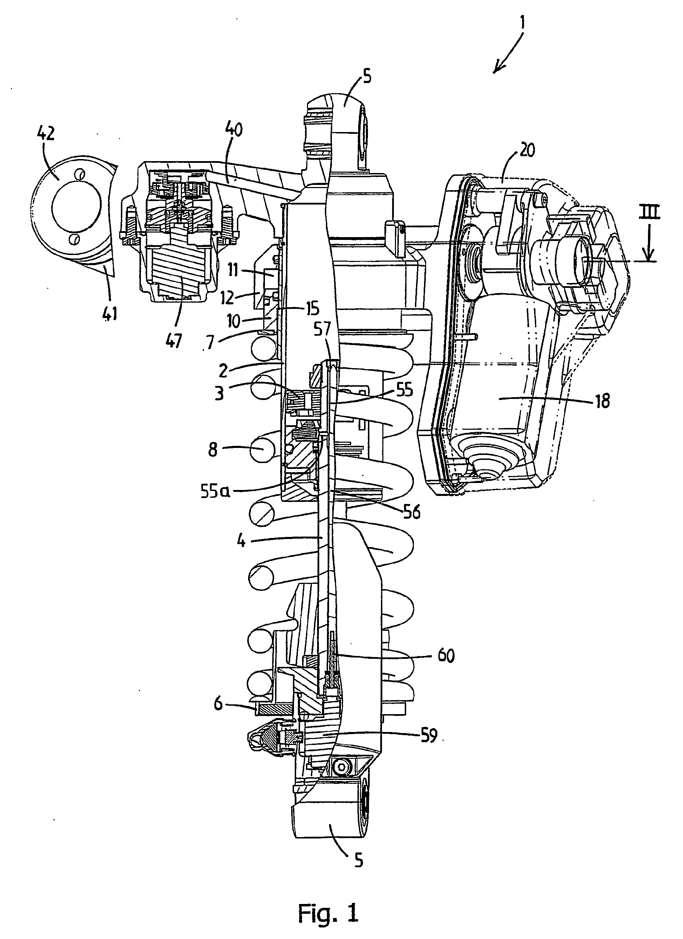

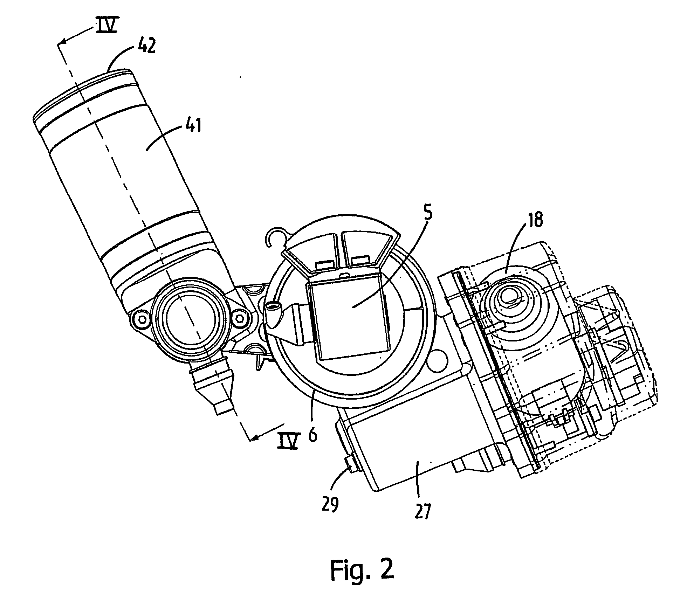

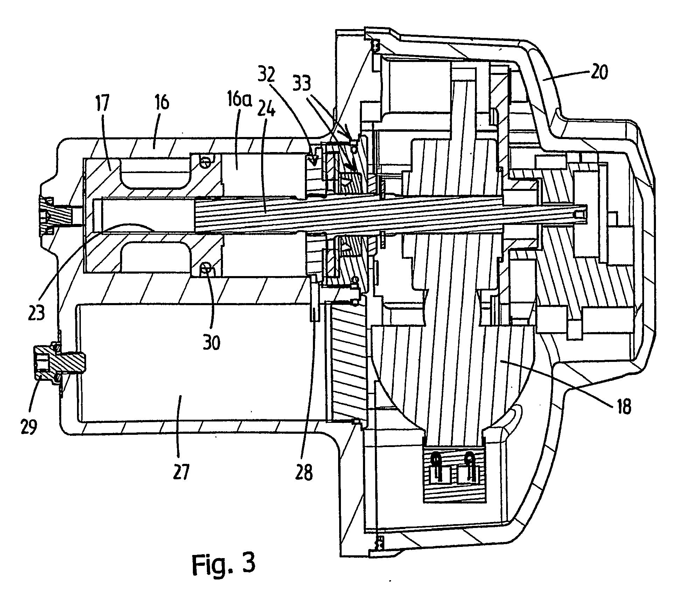

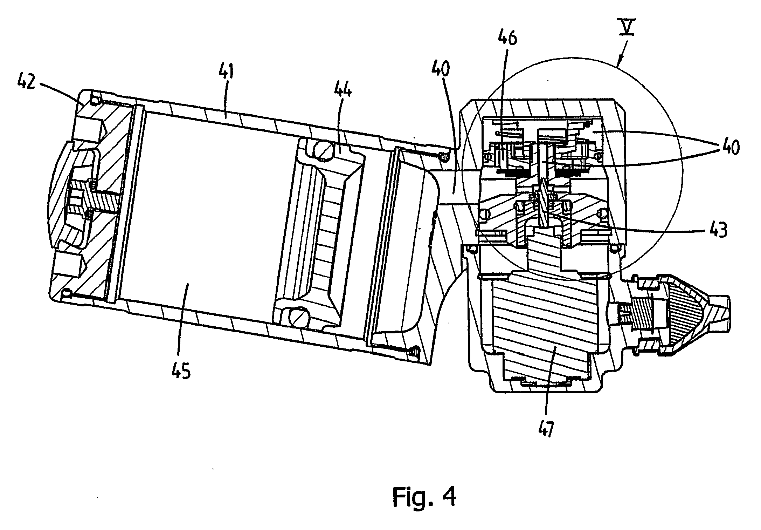

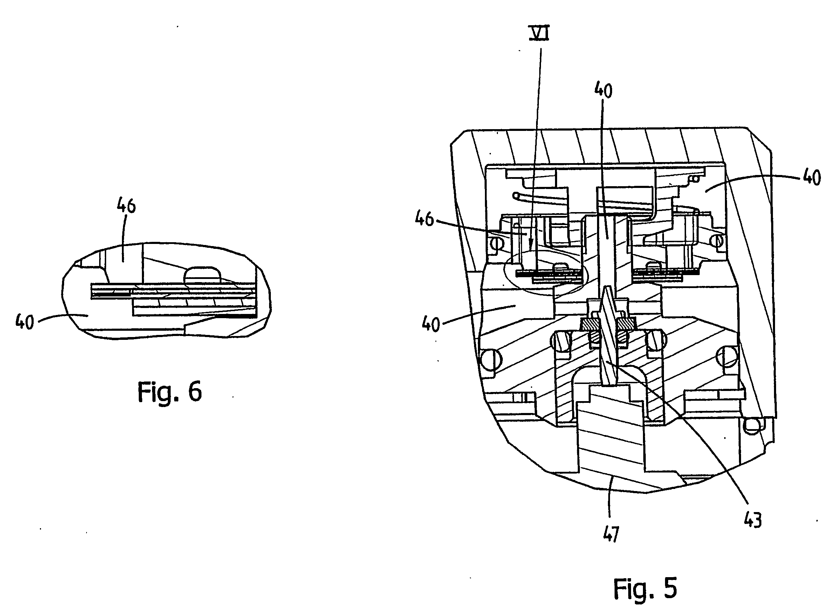

The shock absorber is denoted overall by reference numeral 1 in Fig. 1-6 and comprises an oil-filled damper cylinder 2 and a damper piston 3 which is displaceable therein. The damper piston 3 is fitted to the end of a piston rod 4. At both ends of the damper cylinder 2 and the piston rod 4 there are assembly parts 5, which are in this case formed by assembly eyelets in which there is a bearing arrangement. Between the assembly parts 5 there are a lower spring base 6 and an upper spring base 7, against which a coil spring 8 is supported. The lower spring base 6 is delimited at the bottom with respect to the bottom assembly part 5.

At the topside, the damper cylinder 2 is in communication, via a connecting passage 40, with a pressure pot 41. On the left-hand side, the pressure pot 41 is closed off by a cover 42, and on the right-hand side it is in communication to a greater or lesser extent with the damper cylinder 2 via an adjustable valve body 43. A displaceable separating element 44, which is in this case formed by a piston body, is accommodated in the pressure pot 41. On the left-hand side, the piston body delimits a gas reservoir 45 which is used to collect the oil displaced by the volume of the piston rod 4 during a compressing movement of the shock absorber 1. The compressing movement is in this case partly damped to a greater or lesser extent by inhibiting the flow of oil from the damper cylinder 2 to the pressure pot 41 by suitable adjustment of the valve body 43 in the connecting passage 40. Furthermore, a through-flow passage 46, in which a resistance is incorporated by means of spring plates, is provided as a pressure relief feature. For return flow of the oil from the pressure pot 41 to the damper cylinder 2, there is a one-way valve which does not exert a particularly high resistance to the flow of oil in this direction.

The valve body 43 is in this case formed by a needle shut-off member which extends partly within the connecting passage 40. The axial position of the valve body 43 in the connecting passage 40 can be adjusted by means of a threaded spindle which can be rotated by an electric motor 47. The electric motor 47 is formed by a stepper motor which if desired can be actuated remotely, for example from the handlebars of the motorcycle, using an operating switch. In this way, the inward damping of the shock absorber 1 can be adjusted quickly and efficiently independently of the outward damping.

In the piston rod 4 there is a through-flow passage 55 which extends between chambers above and below the damper piston 3. In this case, the through-flow passage 55 extends from the top downwards, with its free end opening out on one side of the damper piston 3, and is provided with a branch 55a which opens out on the other side of the damper piston 3. In the through-flow passage 55 there is an adjustable valve body 56, via which the through-flow passage 55 can be opened to a greater or lesser extent. The valve body 56 comprises a needle shut-off member which extends within the through-flow passage 55. The axial position of the needle shut-off member can be adjusted with respect to a valve seat 57 by means of a threaded spindle which can be rotated by an electric motor 59. The electric motor 59 is formed by a DC stepper motor which if desired can be actuated remotely, for example from the handlebars of the motorcycle, using an operating switch.

The damper piston 3 is provided with through-flow passages, in which a resistance can be installed by means of spring plates in a known way. Therefore, together with the through-flow passage 55 in the piston rod 4, this allows oil to move from one side of the damper piston 3 to the other if the shock absorber 1 compresses or rebounds. The outward damping of the shock absorber 1 together with a fraction of the inward damping can now be adjusted quickly and efficiently by adapting the axial position of the valve body 56 in the through-flow passage 55 by suitable actuation of the electric motor 59.

At the underside of the valve body 56 there is a pin 60 which has a smaller diameter than the largest diameter of the valve body 56. The pressurized oil in the damper cylinder 2 also passes via the through-flow passage 55 on the underside of the valve body 56. On account of the presence of the pin 60, the effective surface area on the underside of the valve body 56 on which the oil can exert an upward pressure is smaller than the effective surface area on the topside of the valve body 56 on which the oil can exert a downward pressure. This produces a resultant force on the valve body 56 which is directed downwards and therefore advantageously prevents the needle shut-off member from shooting out of the through-flow passage 55 at the top. The upwards pressure on the underside of the valve body 56 advantageously contributes to facilitating displacement of the valve body 56, and therefore reduces the power required of the electric motor 59 if the valve body 56 needs to be adjusted and/or shortens the time required for adjusting the position of the valve body 56.

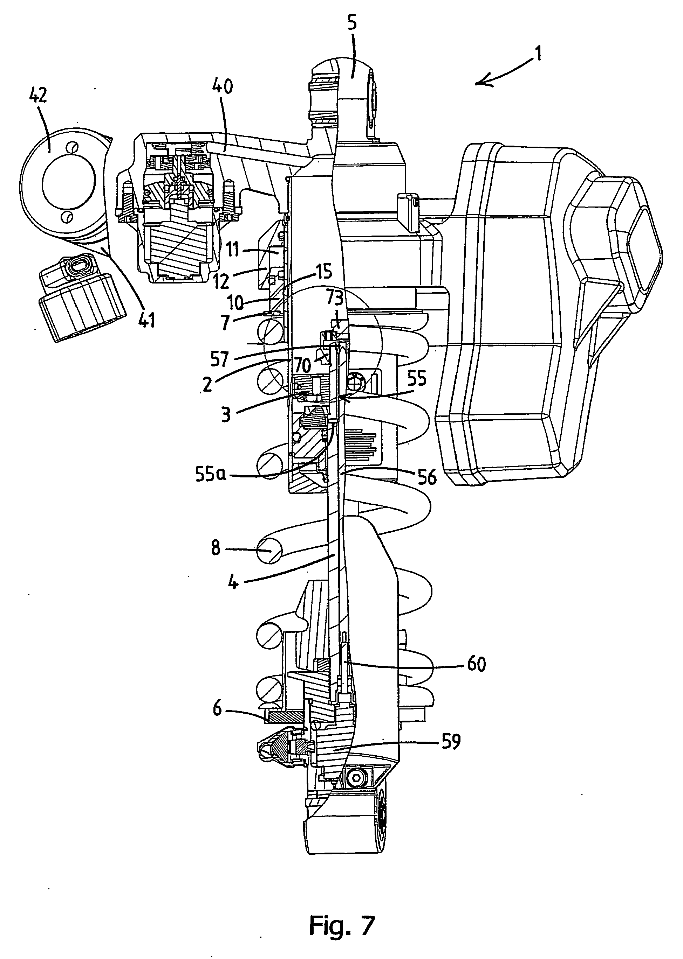

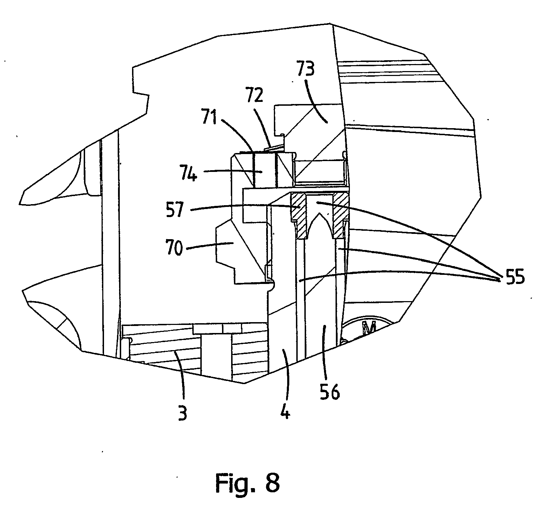

Fig. 7 and 8 show a variant in which identical components are denoted by the same reference numerals. The difference in this variant is that a locking element 70 has now been screwed onto the free end of the piston rod 4, with a nonreturn valve 71 accommodated in the locking element 70. The nonreturn valve 71 is in this case formed by a ring which can move upwards and is delimited at the top by a (sinusoidal) spring member 72 which, in turn, is delimited by a securing bolt 73 which is screwed into a cavity in the locking element 70. The through-flow passage 55 in the piston rod 4 continues into the locking element 70, where one or more bores 74 are provided which open out at the underside of the nonreturn valve 71.

In this way, the through-flow passage 55 is delimited at its free end by the nonreturn valve 71. The nonreturn valve 71 opens easily during a rebound movement, so that the oil can easily flow through it. During a bumping movement, the nonreturn valve 71 closes, with the result that it is impossible for any oil to pass through it. In this way, during the inward movement of the damper piston 3 the pressures on the needle shut-off member and therefore on the electric motor 59 are not as high. Consequently, the electric motor 59 does not move undesirably, and it is advantageously possible to use a pin 60 with a slightly larger diameter. This advantageously prevents the needle shut-off member from being pulled into its valve seat 57 during the outward movement, which would cause it to unintentionally shut off this through-flow.

In addition to the embodiment shown, numerous variants are possible. For example, it is possible to use different types of valve bodies, the position of which can be adjusted with the aid of an electric motor. The nonreturn valve can also be of different design. By way of example, the spring member can be integrated in the nonreturn valve or may even be omitted altogether. As an alternative to gas pressure, the pressure means may also comprise a spring element which bears against the control piston. As an alternative to threaded spindles, it is also possible to provide other types of transmissions between the electric motors and the control piston or the valve bodies. The threaded spindle can be connected to the electric motor, but may also directly form the output shaft of the electric motor. The electric motors can optionally be provided with current from the vehicle battery directly via switches which can be operated by the rider. However, it is also possible to provide an automated control system with sensors for actuating the electric motors. The pressure means, the control of the position of the control piston by the electric motor for adjusting the spring preloading, the control of the position of the valve body in the connecting passage to the pressure pot by the electric motor for adjusting the inward damping, and the control of the position of the valve body in the through-flow passage through the piston rod by the electric motor for adjusting the outward damping, can also be used independently of one another for a shock absorber, i.e. the others may then not be adjustable or may be adjustable in a different way. It is preferable for the three adjustment options to be used in combination with one another, resulting in a multiply adjustable shock absorber which is reliable in use and the properties of which can be adapted automatically or manually by a rider as desired, as a function of the particular conditions of use.

## Claims

1. Shock absorber for use in vehicles, in particular for a motorcycle, comprising:
- a hydraulic damper cylinder (2) having a damping medium and a damper piston (3) which can be displaced within the damper cylinder (2);
- a piston rod (4) connected to the damper piston (3);
- assembly parts (5) provided at the free ends of the damper cylinder (2) and the piston rod (4);
- a through-flow passage (55) which is provided in the piston rod (4) of the damper piston (3) and extends between chambers in the damper cylinder (2) on either side of the damper piston (3);
- an adjustable valve body (56) provided in the through-flow passage (55),wherein the valve body (56) comprises a needle shut-off member which at least partially extends within the through-flow passage (55); **characterised in that** it further comprises
an actuable electric motor (59) for adjusting the axial position of the valve body (56) in the through-flow passage (55) to close off the through-flow passage in the piston rod to a greater or lesser extent in which the needle shut-off member, on the side of the electric motor (59), comprises a narrow section, which is connected to the bottom end of the needle shut-off member and has a diameter which is smaller than the largest diameter of the needle shut-off member.

2. Shock absorber according to claim 1, in which the valve body (56) is designed to interact with a threaded spindle, which in turn is connected to the electric motor (59) such that it can be driven in rotation or forms the output shaft of the electric motor.

3. Shock absorber according to claim 1 or 2, wherein the shock absorber comprises further a first and second spring bases (6, 7), provided in the vicinity of the assembly parts (5), with a compression spring (8) enclosed between them;

4. Shock absorber according to one of the preceding claims, in which the through-flow passage (55), on the side of the free end of the piston rod (4), is delimited by a nonreturn valve (71) for substantially shutting off the through-flow passage (55) during an inward movement of the damper piston (3) in the damper cylinder (2) and opening the through-flow passage (55) during an outward movement of the damper piston (3) in the damper cylinder (2).

5. Shock absorber according to claim 4, in which the nonreturn valve (71) is provided in a locking element (70) which is connected, in particular releasably by means of a screw connection, to the free end of the piston rod (4).

6. Shock absorber according to one of the preceding claims, in which the electric motor (18) is a DC motor.

7. Shock absorber according to claim 6, in which the electric motor (18) is a stepper motor.

8. Motorcycle comprising at least one shock absorber (1) according to one of the preceding claims.

## Patentansprüche

1. Stoßdämpfer für die Verwendung in Fahrzeugen, insbesondere für ein Motorrad, mit:
- einem Hydraulik-Dämpferzylinder (2) mit einem Dämpfungsmedium und einem Dämpferkolben (3), der innerhalb des Dämpferzylinders (2) verschoben werden kann;
- einer Kolbenstange (4), die mit dem Dämpferkolben (3) verbunden ist;
- Montageteile (5), an den freien Enden des Dämpferzylinders (2) und der Kolbenstange (4) vorgesehen sind;
- Einen Durchflusskanal (55), welcher in der Kolbenstange (4) des Dämpferkolbens (3) vorgesehen ist und sich zwischen Kammern in dem Dämpferzylinder (2) auf beiden Seiten des Dämpferkolbens (3) erstreckt;
- einem einstellbaren Ventilgehäuse (56), das in dem Durchflusskanal (55) vorgesehen ist, wobei das Ventilgehäuse (56) ein Nadel-Abschaltelement umfasst, welches sich wenigstens teilweise in den Durchflusskanal (55) hinein erstreckt, **dadurch gekennzeichnet, dass** dieses ferner umfasst
einen betätigbaren Elektromotor (59) zum Einstellen der axialen Position des Ventilgehäuses (56) in dem Durchflusskanal (55), um den Durchflusskanal in einem größeren oder geringeren Maß zu verschließen, in welchem das Nadel-Abschaltelement, auf der Seite des Elektromotors (59), einen schmalen Abschnitt aufweist, welcher mit dem Bodenende des Nadel-Abschaltelements verbunden ist und einen Durchmesser hat, welcher kleiner ist als der größte Durchmesser des Nadel-Abschaltelements.

2. Stoßdämpfer nach Anspruch 1, in welchem das Ventilgehäuse (56) so ausgebildet ist, dass dieses mit einer Gewindespindel zusammenwirkt, welche wiederum mit dem Elektromotor (59) derart verbunden ist, dass dieser zu einer Drehung angetrieben werden kann, oder die Abtriebswelle des Elektromotors bildet.

3. Stoßdämpfer nach Anspruch 1 oder 2, in welchem der Stoßdämpfer ferner eine erste und zweite Federbasis (6, 7) umfasst, vorgesehen in der Nähe der Montageteile (5), wobei eine Druckfeder (8) zwischen diesen eingeschlossen ist.

4. Stoßdämpfer nach einem der vorhergehenden Ansprüche, in welchem der Durchflusskanal (55) auf der Seite des freien Endes der Kolbenstange (4) durch ein Rückschlagventil (71) begrenzt ist zum im Wesentlichen Absperren des Durchflusskanals (55) während einer Einwärtsbewegung des Dämpferkolbens (3) in den Dämpferzylinder (2) und Öffnen des Durchflusskanals (55) während einer Auswärtsbewegung des Dämpferkolbens (3) in dem Dämpferzylinder (2).

5. Stoßdämpfer nach Anspruch 4, in welchem das Rückschlagventil (71) in einem Sperrelement (70) vorgesehen ist, welches insbesondere lösbar mittels einer Schraubverbindung mit dem freien Ende der Kolbenstange (4) verbunden ist.

6. Stoßdämpfer nach einem der vorhergehenden Ansprüche, in welchem der Elektromotor (18) ein Gleichstrommotor ist.

7. Stoßdämpfer nach Anspruch 6, in welchem der Elektromotor (18) ein Schrittmotor ist.

8. Motorrad mit wenigstens einem Stoßdämpfer (1) nach einem der vorhergehenden Ansprüche.

## Revendications

1. Amortisseur de chocs destiné à être utilisé sur des véhicules, en particulier pour motocyclette, comprenant :
un cylindre d'amortisseur hydraulique (2) ayant un milieu d'amortissement et un piston d'amortisseur (3) qui peut être déplacé à l'intérieur du cylindre d'amortisseur (2) ;
une tige de piston (4) raccordée au piston d'amortisseur (3) ;
des parties d'assemblage (5) prévues aux extrémités libres du cylindre d'amortisseur (2) et de la tige de piston (4) ;
un passage d'écoulement (55) qui est prévu dans la tige de piston (4) du piston d'amortisseur (3) et s'étend entre les chambres dans le cylindre d'amortisseur (2) de chaque côté du piston d'amortisseur (3) ;
un corps de soupape réglable (56) prévu dans le passage d'écoulement (55), dans lequel le corps de soupape (56) comprend un élément d'arrêt de pointeau qui s'étend au moins partiellement à l'intérieur du passage d'écoulement (55) ; **caractérisé en ce qu'**il comprend en outre :
un moteur électrique actionnable (59) pour régler la position axiale du corps de soupape (56) dans le passage d'écoulement (55) pour fermer le passage d'écoulement dans la tige de piston dans une plus ou moins grande mesure dans laquelle l'élément d'arrêt de pointeau, du côté du moteur électrique (59), comprend une section étroite qui est raccordée à l'extrémité inférieure de l'élément d'arrêt de pointeau et a un diamètre qui est inférieur au plus grand diamètre de l'élément d'arrêt de pointeau.

2. Amortisseur de chocs selon la revendication 1, dans lequel le corps de soupape (56) est conçu pour interagir avec une broche filetée, qui à son tour est raccordée au moteur électrique (59), de sorte qu'elle peut être entraînée en rotation ou forme l'arbre de sortie du moteur électrique.

3. Amortisseur de chocs selon la revendication 1 ou 2, dans lequel l'amortisseur de chocs comprend en outre des première et deuxième bases de ressort (6, 7), prévues à proximité des parties d'assemblage (5), avec un ressort de compression (8) enfermé entre elles.

4. Amortisseur de chocs selon l'une quelconque des revendications précédentes, dans lequel le passage d'écoulement (55), du côté de l'extrémité libre de la tige de piston (4), est délimité par une soupape de non retour (71) pour obturer sensiblement le passage d'écoulement (55) pendant un mouvement vers l'intérieur du piston d'amortisseur (3) dans le cylindre d'amortisseur (2) et pour ouvrir le passage d'écoulement (55) pendant un mouvement vers l'extérieur du piston d'amortisseur (3) dans le cylindre d'amortisseur (2).

5. Amortisseur de chocs selon la revendication 4, dans lequel la soupape de non retour (71) est prévue dans un élément de blocage (70) qui est raccordé, en particulier de manière amovible au moyen d'un raccordement à vis, à l'extrémité libre de la tige de piston (4).

6. Amortisseur de chocs selon l'une quelconque des revendications précédentes, dans lequel le moteur électrique (18) est un moteur à courant continu.

7. Amortisseur de chocs selon la revendication 6, dans lequel le moteur électrique (18) est un moteur pas à pas.

8. Motocyclette comprenant au moins un amortisseur de chocs (1) selon l'une quelconque des revendications précédentes.
